# EUROPÄISCHE PATENTSCHRIFT

(11) **EP 0 723 380 B1**
(45) Veröffentlichungstag und Bekanntmachung des Hinweises auf die Patenterteilung: **08.03.2000**
(21) Anmeldenummer: 96100139.3
(22) Anmeldetag: 08.01.1996
(51) Int. Cl.: H04R 1/08

(54) **Elektronisches Informationsgerät, insbesondere Informations-Notrufsäule**
Electronic information device, particularly emergency column
Dispositif électronique d'information, en particulier colonne d'émergence

(30) Priorität: 19.01.1995 DE 29500773 U
(43) Veröffentlichungstag der Anmeldung: 24.07.1996
(73) Patentinhaber: Neumann Elektronik GmbH, D-45478 Mülheim (DE)
(72) Erfinder: Neumann, Dirk, D-45478 Mühlheim/Ruhr (DE)
(74) Vertreter: Feder, Wolf-Dietrich, Dr. Dipl.-Phys.

(56) Entgegenhaltungen:
- DE-A- 2 841 214

## Beschreibung

Die Erfindung betrifft ein elektronisches Informationsgerät, insbesondere eine Informations-Notrufsäule, mit einem Gehäuse, in dem elektronische Bauteile angeordnet sind und das eine Frontplatte besitzt, an der mindestens ein Betätigungselement mittels einer die Frontplatte durchsetzenden Schraubverbindung befestigt ist.

Elektronische Informationsgeräte dieser Art sind allgemein bekannt.

Der Erfindung liegt die Aufgabe zugrunde, in einem derartigen Informationsgerät in möglichst platzsparender Weise und ohne großen technischen Zusatzaufwand ein Mikrofon, insbesondere ein für spezielle Zwecke gedachtes zweites Mikrofon anzuordnen.

Die Lösung dieser Aufgabe geschieht erfindungsgemäß mit den Merkmalen aus dem kennzeichnenden Teil des Patentanspruchs 1. Vorteilhalfte Weiterbildungen der Erfindung sind in den Unteransprüchen beschrieben.

Der Grundgedanke der Erfindung besteht darin, die Schraubverbindung für das Betätigungselement, bzw. eines der Betätigungselemente des Gerätes gleichzeitig zur Befestigung des Mikrofons auszunutzen, wobei infolge der miniaturisierten Ausführung des Mikrofons nur ein sehr geringer Platzbedarf entsteht und zur Zuführung des Schalls vom Außenraum her zum Mikrofon keine zusätzliche Öffnung in der Frontplatte notwendig ist, sondern der Schall durch die Längsbohrung des Schraubenbolzens, der selbst durch eine ohnehin vorhandene Öffnung in der Frontplatte geführt ist, dem Mikrofon zugeleitet wird. Die besondere Ausbildung und Befestigungsart des Mikrofons bei dem erfindungsgemäßen Informationsgerät eröffnet insbesondere die Möglichkeit, das Mikrofon oder ein zusätzliches Mikrofon innnerhalb des Gerätes an einer Stelle anzuordnen, die einer im Außenraum angeordneten Schallquelle besonders nahe ist, ohne daß eine besondere Rücksicht auf die Platzverhältnisse im Innenraum des Gehäuses oder die Ausbildung der Frontplatte genommen werden muß. Eine solche Möglichkeit besteht beispielsweise darin, bei einer Informations-Notrufsäule ein zweites Mikrofon so anzuordnen, daß es sich in einer sehr viel geringeren Höhe oberhalb des Erdbo dens befindet als ein Mikrofon, das für einen erwachsenen Menschen normaler Größe vorgesehen ist. Zu diesem Zweck kann an der Informations-Notrufsäule ein eigenes Betätigungselement, beispielsweise ein Betätigungstaster angeordnet sein, der auf einer sehr viel geringeren Höhe liegt, als das übliche Betätigungselement und das für die Betätigung durch Rollstuhlfahrer oder auch Kinder gedacht ist. An diesem zusätzlichen Betätigungselement kann dann gleichzeitig in der erfindungsgemäßen Weise ein zusätzliches Mikrofon angeordnet sein, das immer dann eingeschaltet wird, wenn dieses zusätzliche Betätigungselement betätigt wird. Auf diese Weise haben Rollstuhlfahrer oder auch Kinder nicht nur die Möglichkeit, einen Notruf abzusenden oder eine Information anzufordern, sondern sie können auch direkt in das zusätzliche Mikrofon sprechen, so daß sie in der mit der Informations-Notrufsäule verbundenen Zentrale verstanden werden.

Im folgenden wird anhand der beigefügten Zeichnungen ein Ausführungsbeispiel für ein elektronisches Informationsgerät nach der Erfindung näher erläutert.

In den Zeichnungen zeigen:
Fig. 1 ein als Informations-Notrufsäule ausgebildetes elektronisches Informationsgerät in einer Ansicht auf die Frontplatte;
Fig. 2 in gegenüber Fig. 1 vergrößerter Darstellung einen Vertikalschnitt durch die Frontplatte im Bereich eines Betätigungselements;
Fig. 3 in Seitenansicht das an dem in Fig. 2 dargestellten Betätigungselement angeordnete Halterungselement, in dem ein zusätzliches Mikrofon angeordnet ist;
Fig. 4 das Halterungselement nach Fig. 3 in einer explodierten Schnittdarstellung zusammen mit den im Halterungselement angeordneten Mikrofon und zusätzlichen Bauteilen.

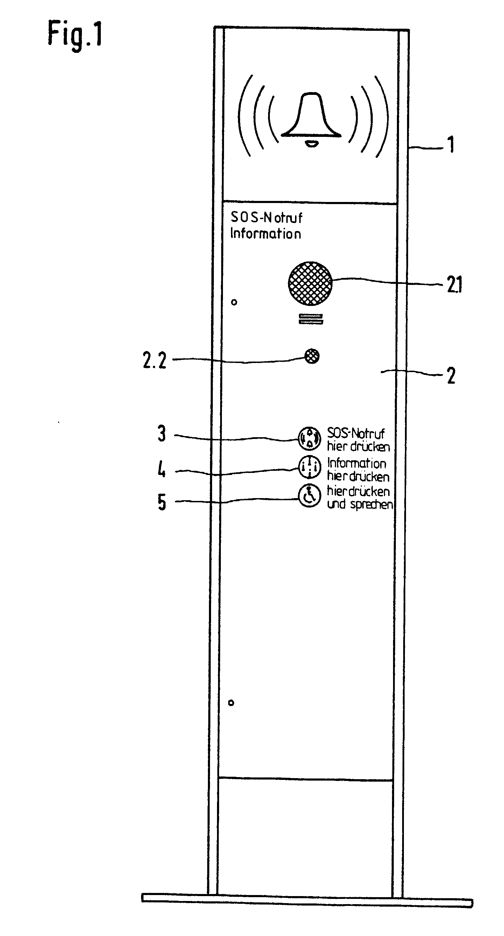

Fig. 1 zeigt eine Informations-Notrufsäule 1, die beispielsweise an einem öffentlichen Platz oder in einem Bahnhof aufgestellt sein kann und in nicht besonders dargestellter Weise an eine Zentrale angeschlossen ist, an der die abgegebenen Notrufe oder Informationsanfragen ankommen und beantwortet werden.

Das Gehäuse der Informations-Notrufsäule 1, in dem in nicht dargestellter Weise die zum Gerät gehörenden elektronischen Bauteile untergebracht sind, besitzt eine vertikal stehende Frontplatte 2, die vergitterte Öffnungen 2.1 bzw. 2.2 aufweist, hinter denen ein Lautsprecher und ein erstes Mikrofon angeordnet sind. Weiterhin sind in der Frontplatte 2 drei Betätigungselemente, beispielsweise Betätigungstaster angeordnet, wobei ein erster Taster 3 zur Abgabe eines Notrufs gedacht ist, während ein darunter angeordneter zweiter Taster 4 zur Abgabe einer Informationsanfrage gedacht ist und unterhalb der beiden Taster 3 und 4 ein zusätzlicher Taster 5 angeordnet ist, der sich in einer solchen Höhe befindet, daß er beispielsweise von einem Rollstuhlfahrer leicht erreicht werden kann und der sowohl zur Abgabe eines Notrufs oder zur Abgabe einer Informationsanfrage gedacht und entsprechend mit den im Gehäuse angeordneten elektronischen Bauteilen verbunden ist.

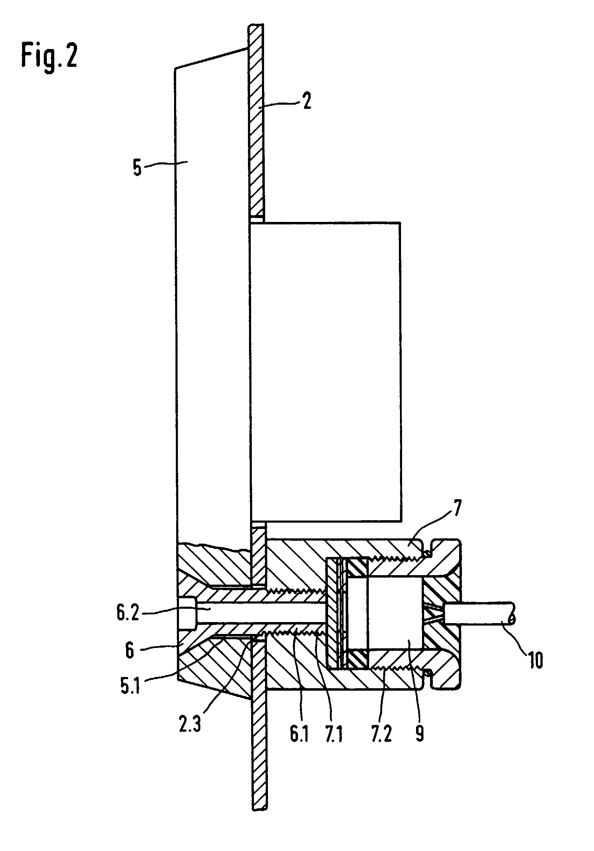

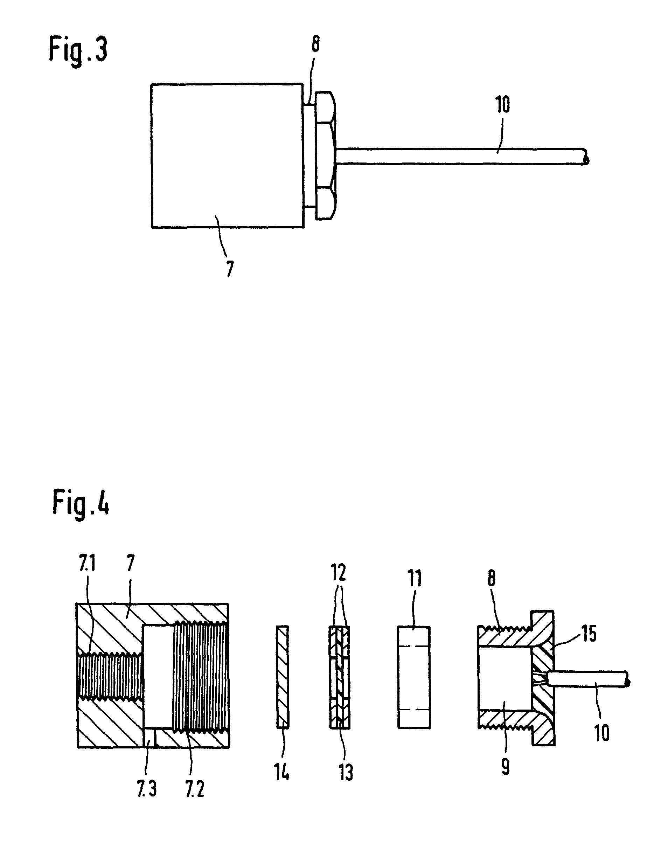

In Fig. 2 ist die Befestigung des Tasters 5 in der Frontplatte 2 genauer dargestellt. Der Taster 5 ist mit mehreren Schraubverbindungen an der Frontplatte 2 befestigt, von denen eine in Fig. 2 im unteren Bereich des Tasters 5 genauer geschnitten dargestellt ist. Durch eine Bohrung 5.1 in der Halterungsplatte des Tasters 5 und eine Öffnung 2.3 der Frontplatte 2 ist eine Schraube 6 hindurchgeführt, deren Schraubenbolzen 6.1 eine Bohrung 6.2 aufweist, über die der Außenraum mit dem Innenraum des Gehäuses verbunden ist. Auf den in den Innenraum des Gehäuses hineinreichenden Endabschnitt des Schraubenbolzens 6.1 ist ein gleichzeitig als Befestigungsmutter für die Schraubverbindung dienendes, als Drehteil ausgebildetes Halterungselement 7 fest aufgeschraubt. Hierzu besitzt das Halterungselement an der der Frontplatte zugewandten Seite eine erste mit einem Innengewinde versehene Bohrung 7.1, die so bemessen ist, daß das innere Ende des Schraubenbolzens 6.1 mit der Austrittsöffnung der Längsbohrung 6.2 am Ende der ersten Bohrung 7.1 liegt. An die erste Bohrung 7.1 schließt sich in Richtung zum Innenraum hin eine zweite mit einem Innengewinde versehene Bohrung 7.2 an, die einen größeren Durchmesser aufweist, als die erste Bohrung 7.1. In diese zweite Bohrung 7.2 ist, wie aus Fig. 3 und 4 näher zu entnehmen, eine Halterung 8 eingeschraubt, innerhalb der ein miniaturisiertes Mikrofon 9, beispielsweise eine Elektret-Mikrofon angeordnet ist. Das Mikrofon 9 ist mit einer Vergußmasse 15 in der Halterung 8 befestigt und besitzt eine Zuleitung 10, mit der es an die nicht dargestellten elektronischen Bauteile des Geräts angeschlossen ist.

Vor der Halterung 8 mit dem Mikrofon 9 sind innerhalb der zweiten Bohrung 7.2 von außen nach innen ein beispielsweise aus Streckmetall bestehendes Schutzgitter 14, zwei Halterungsringe 12 mit einer dazwischen angeordneten schalldurchlässigen Abdichtungsfolie 13 sowie eine Gummidichtung 11 angeordnet. Hierdurch wird verhindert, das Wasser oder Schmutzpartikel von außen eindringen können. Das Schutzgitter 14 verhindert zusätzlich eine Beschädigung des Mikrofons etwa durch spitze Gegenstände, welche durch die Bohrung 6.2 eingeführt werden.

Weiterhin besitzt die zweite Bohrung 7.2 eine radial, im Halterungselement 7 verlaufende, sich zum Mantel des Halterungselements hin öffnende Wasserabflußbohrung 7.3, die in dem dargestellten eingebauten Zustand nach unten ausgerichtet ist, so daß eventuell durch die Bohrungen 6.2 und 7.1 eingedrungenes Wasser nach unten in den Innenraum des Gehäuses abfließen kann.

Zur Aufnahme durch das Mikrofon 9 sollte die im Außenraum befindliche Schallquelle, also beispielsweise der Mund der Bedienungsperson möglichst dicht an den Taster 5 herangeführt werden, so daß der Schall durch die Bohrungen 6.2 und 7.1 auf das Mikrofon 9 auftrifft und die entsprechenden Signale über die Anschlußleitung 10 weitergeleitet werden.

## Patentansprüche

1. Elektronisches Informationsgerät, insbesondere Informations-Notrufsäule, mit einem Gehäuse (1), in dem elektronische Bauteile angeordnet sind und das eine Frontplatte (2) besitzt, an der mindestens ein Betätigungselement (3, 4, 5) mittels einer die Frontplatte (2) durchsetzenden Schraubverbindung (6) befestigt ist, dadurch gekennzeichnet, daß mindestens einer der die Frontplatte (2) durchsetzenden Schraubenbolzen (6.1) der Schraubverbindung (6) eine in seiner Längsrichtung verlaufende sich in den Außenraum und den Innenraum des Gehäuses öffnende schalldurchlässige Bohrung (6.2) aufweist und auf den in den Innenraum des Gehäuses (1) hineinragenden Endabschnitt des Schraubenbolzens (6.1) ein mit einem Innengewinde versehenes Halterungselement (7) aufgeschraubt ist, an oder in dem ein Mikrofon (9) in miniaturisierter Ausführung angeordnet ist.

2. Informationsgerät nach Anspruch 1, dadurch gekennzeichnet, daß das Halterungselement (7) zugleich als Befestigungsmutter der Schraubverbindung (6) dient.

3. Informationsgerät nach Anspruch 1 oder 2, dadurch gekennzeichnet, daß das Halterungselement (7) an der der Frontplatte (2) zugewandten Seite eine sich über einen Teil seiner Länge erstreckende, mit Innengewinde versehene Bohrung (7.1) zum Aufschrauben auf den Schraubenbolzen (6.1) aufweist, an die sich zum Innenraum des Gehäuses (1) hin eine zweite mit Innengewinde versehene Bohrung (7.2) mit größerem Durchmesser anschließt, in die eine das Mikrofon (9) enthaltende Halterung (8) einschraubbar ist.

4. Informationsgerät nach Anspruch 3, dadurch gekennzeichnet, daß die zweite Bohrung (7.2) an ihrem inneren Ende eine radial im Halterungselement (7) verlaufende, sich zum Mantel des Halterungselements hin öffnende Wasserabflußbohrung (7.3) aufweist, die im eingebauten Zustand nach unten ausgerichtet ist.

5. Informationsgerät nach Anspruch 3 oder 4, dadurch gekennzeichnet, daß in der zweiten Bohrung (7.2) vor dem Mikrofon (9) ein Schutzgitter (14) angeordnet ist.

6. Informationsgerät nach Anspruch 5, dadurch gekennzeichnet, daß das Schutzgitter (14) aus Streckmetall besteht.

7. Informationsgerät nach Anspruch 5 oder 6, dadurch gekennzeichnet, daß zwischen Schutzgitter (14) und Mikrofon (9) eine schalldurchlässige Abdichtungsfolie (13) angeordnet ist.

8. Informationsgerät nach einem der Ansprüche 1 bis 7, dadurch gekennzeichnet, daß das miniaturisierte Mikrofon (9) als Elektret-Mikrofon ausgebildet ist.

9. Informationsgerät nach einem der Ansprüche 1 bis 8, dadurch gekennzeichnet, daß an der Außenseite der Frontplatte (2) oberhalb des die in Längsrichtung verlaufende Bohrung (6.2) aufweisenden Schraubenbolzens (6.1) ein Abschirmdach angeordnet ist.

## Claims

1. An electronic information device, more particularly an information-SOS call column, with a housing (1), in which electronic components are arranged and which comprises a front plate (2), to which at least one operating element (3, 4, 5) is secured by means of a screw connection (6) penetrating the front plate (2), characterised in that at least one of the screw bolts (6.1) of the screw connection (6) penetrating the front plate (2) comprises a sound transmitting bore (6.2) extending in the longitudinal direction of the screw bolt and opening into the external space and inner chamber of the housing, and a retaining element (7) provided with an internal thread is screwed onto the end section of the screw bolt (6.1) projecting into the interior of the housing (1), a microphone (9) with a miniaturised construction being arranged on or in the retaining element (7).

2. An information device according to claim 1, characterised in that the retaining element (7) simultaneously acts as a securing nut of the screw connection (6).

3. An information device according to claim 1 to 2, characterised in that, on its side facing the front plate (2), the retaining element (7) comprises a bore (7.1) extending over part of its length and provided with an internal thread for screwing onto the screw bolt (6.1), a second bore (7.2) having a larger diameter and an internal thread adjoining the bore (7.1) in the direction of the inner chamber of the housing (1), it being possible to screw a mount (8) containing the microphone (9) into said second bore (7.2).

4. An information device according to claim 3, characterised in that, at its inner end, the second bore (7.2) comprises a water outflow bore (7.3), which extends radially within the retaining element (7), opens out onto the outer surface of the retaining element and points downwards in the fitted state.

5. An information device according to claim 3 or 4, characterised in that a protective mesh (14) is arranged in the second bore (7.2) in front of the microphone (9).

6. An information device according to claim 5, characterised in that the protective mesh (14) is made of expanded metal.

7. An information device according to claim 5 or 6, characterised in that a sound transmitting sealing film (13) is arranged between the protective mesh (14) and the microphone (9).

8. An information device according to one of claims 1 to 7, characterised in that the miniaturised microphone (8) is constructed as an electret microphone.

9. An information device according to one of claims 1 to 8, characterised in that a protective roof is arranged on the outside of the front plate (2) above the screw bolt (6.1) comprising the bore (6.2) extending in the longitudinal direction.

## Revendications

1. Appareil d'information électronique, en particulier borne téléphonique d'urgence-information comprenant un coffret (1) dans lequel sont disposés des composants électroniques et qui possède une platine avant (2) à laquelle au moins un élément d'actionnement (3, 4, 5) est fixé au moyen d'un assemblage boulonné (6) qui traverse la platine avant (2), caractérisé en ce qu'au moins une des vis (6.1) de l'assemblage boulonné (6) qui traverse la platine avant (2) présente un perçage (6.2) s'étendant dans sa direction longitudinale, qui laisse passer les sons et qui s'ouvre dans le volume extérieur et dans le volume intérieur du coffret et, sur le segment terminal de la vis (6.1) qui fait saillie dans le volume intérieur du coffret (1), est vissé un élément de monture (7) muni d'un filetage intérieur, sur ou dans lequel est disposé un microphone (9) d'un type miniaturisé.

2. Appareil d'information selon la revendication 1 caractérisé en ce que l'élément de monture (7) sert en même temps d'écrou de fixation pour l'assemblage boulonné (6).

3. Appareil d'information selon la revendication 1 ou 2, caractérisé en ce que l'élément de monture (7) présente, sur le côté dirigé vers la platine avant (2), un perçage (7.1) qui s'étend sur une partie de sa longueur et est muni d'un filetage intérieur pour le vissage sur la vis (6.1), et auquel fait suite, en direction du volume intérieur du coffret (1) un deuxième perçage (7.2) de plus grand diamètre, muni d'un filetage intérieur, et dans lequel une monture (8) contenant le microphone (9) peut être vissée.

4. Appareil d'information selon la revendication 3, caractérisé en ce que le deuxième perçage (7.2) présente, à son extrémité intérieure, un perçage d'écoulement de l'eau (7.3) s'étendant radialement dans l'élément de monture (7), qui s'ouvre vers la paroi latérale de l'élément de monture et est orienté vers le bas à l'état monté.

5. Appareil d'information selon la revendication 3 ou 4, caractérisé en ce qu'une grille de protection (14) est disposée dans le deuxième perçage (7.2) en avant du microphone (9) .

6. Appareil d'information selon la revendication 5, caractérisé en ce que la grille de protection (14) est faite de métal déployé.

7. Appareil d'information selon la revendication 5 ou 6, caractérisé en ce qu'une feuille d'étanchéité (13) perméable aux sons est disposée entre la grille de protection (14) et le microphone (9).

8. Appareil d'information selon une des revendications 1 à 7, caractérisé en ce que le microphone miniaturisé (9) est constitué par un microphone électret.

9. Appareil d'information selon l'une des revendications 1 à 8, caractérisé en ce qu'un auvent est disposé sur le côté extérieur de la platine avant (2) au-dessus de la vis (6.1) qui présente le perçage (6.2) s'étendant dans la direction longitudinale.
